# EUROPEAN PATENT APPLICATION

(11) **EP 3 188 463 A1**
(43) Date of publication of application: **05.07.2017**
(21) Application number: 15836758.1
(22) Date of filing: 10.08.2015
(51) Int. Cl.: H04M 3/56, H04M 11/00, H04N 7/15

(54) **OPERATION SYSTEM, COMMUNICATION TERMINAL, COMMUNICATION SYSTEM, OPERATION METHOD, AND PROGRAM**

(30) Priority: 26.08.2014 JP 2014171145
(71) Applicant: Ricoh Company, Ltd., Tokyo 143-8555 (JP)
(72) Inventor: OKUYAMA, Taro, Tokyo 143-8555 (JP)
(74) Representative: Schwabe - Sandmair - Marx
(86) International application number: PCT/JP2015/072692
(87) International publication number: WO 2016/031548

(57) **Abstract**

[Problem] When a communication terminal that is a communication partner is operated in response to an operation request from a communication terminal, noise caused by the input of the operation request and an image of a user that inputs the operation request are transmitted to the communication terminal on the communication partner side via a session between the communication terminals. [Solution] A terminal management system 80 receives a communication ID of a telephone terminal 10a, which has been transmitted by a PC 20a, when a communication session sed for transmitting image data and sound data generated in the telephone terminal 10a to a telephone terminal (10b, 10c) is established. A management system 50 transmits an operation instruction based on a request from the PC 20a to the telephone terminal (10b, 10c) that is a communication partner of the telephone terminal 10a.

## Description

### [Technical Field]

The present invention relates to manipulation of a communication terminal through a communication network.

### [Background Art]

In recent years, with a demand for cutting down the cost and time for transferring a person concerned, etc., a communication system for having a call, a conference, etc., through a communication network such as the internet or a dedicated line has become popular. Such a communication system enables communication between different locations, as communication terminals start communication and perform transmission of content data such as image data and sound data.

Furthermore, there is a method for manipulating a communication terminal, based on a request provided from another communication terminal, that is, a counterpart communication terminal. For example, according to a disclosed method, in a case where voice of a communication partner is too loud, microphone sensitivity of the counterpart communication terminal may be adjusted, based on a request provided from another communication terminal (see patent document 1).

### [Citation List]

### [Patent Literature]

[Patent document 1] Japanese Patent No. 5227893

### [Summary of Invention]

### [Technical Problem]

In a case of a communication terminal manipulating another communication terminal of a communication partner through a manipulation request, there is a problem that noise caused by inputting the manipulation request and an image of a user inputting the manipulation request may be transmitted to the communication terminal of the communication partner, through the session between the communication terminals.

### [Solution to Problem]

One aspect of the present invention provides a manipulation system including: an identification information receiving unit configured to receive identification information for identifying a communication terminal while a session established between the communication terminal and another communication terminal is underway, the session being established for a plurality of communication terminals coupled to a communication network to transmit and receive content data generated in the plurality of communication terminals, the identification information being transmitted from an information processing apparatus coupled to the communication network; and an operation instruction transmitting unit configured to transmit to said another communication terminal an operation instruction based on a request provided from the information processing apparatus, said another communication terminal being a communication partner of the communication terminal that is identified by the identification information.

### [Advantageous Effects of Invention]

At least one embodiment provides an effect that, in a case of a user manipulating a communication terminal of a communication partner, transmission of noise caused by inputting a manipulation request and of an image of a user inputting the manipulation request to the communication terminal of the communication partner through the session between the communication terminals may be prevented.

### [Brief Description of Drawings]

[FIG. 1] FIG. 1 is a schematic view of a communication system, according to an embodiment of the present invention;
[FIG. 2] FIG. 2 is an external view of a telephone terminal;
[FIG. 3] FIG. 3 is a diagram illustrating a hardware configuration of the telephone terminal;
[FIG. 4] FIG. 4 is a diagram illustrating a hardware configuration of a management system;
[FIG. 5] FIG. 5 is a functional block diagram of the telephone terminal, the management system, and a terminal management system;
[FIG. 6A] FIG. 6A is a conceptual diagram of an authentication management table managed in the management system;
[FIG. 6B] FIG. 6B is a conceptual diagram of a terminal management table managed in the management system;
[FIG. 6C] FIG. 6C is a conceptual diagram of a session management table managed in the management system;
[FIG. 7] FIG. 7 is a sequence diagram illustrating processing for establishing a communication session between the telephone terminal and the management system;
[FIG. 8] FIG. 8 is a sequence diagram illustrating processing for establishing a communication session among the telephone terminals;
[FIG. 9] FIG. 9 is a sequence diagram illustrating processing for manipulating counterpart telephone terminals;
[FIG. 10A] FIG. 10A is a drawing illustrating an example of a displayed screen on a display;
[FIG. 10B] FIG. 10B is a drawing illustrating another example of the displayed screen on the display; and
[FIG. 11] FIG. 11 is a conceptual diagram illustrating a situation of transmitting and receiving various types of information in the communication system.

### [Description of Embodiments]

The following description explains an embodiment of the present invention.

### «Overall Configuration of the Embodiment»

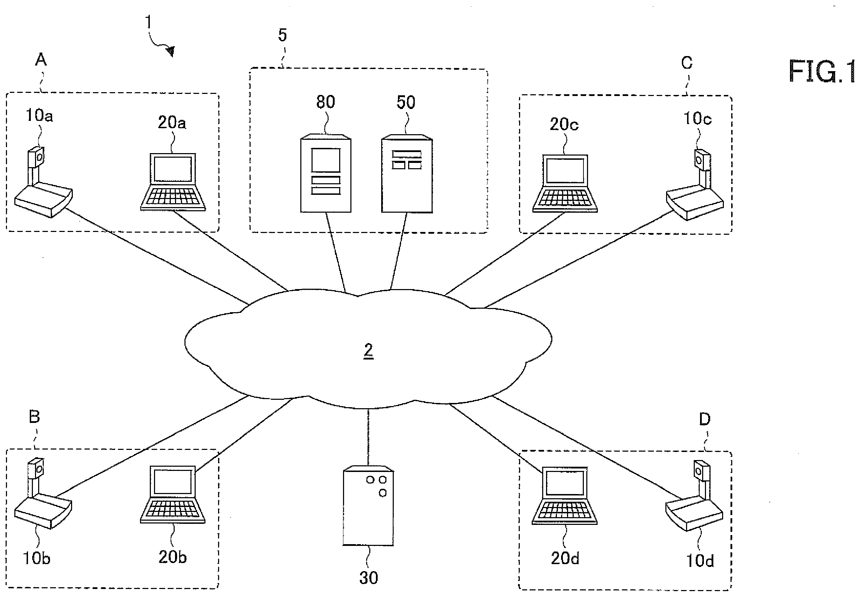

FIG. 1 is a schematic view of a communication system according to the embodiment of the present invention. As illustrated in FIG. 1, a communication system 1 includes telephone terminals (10a, 10b, 10c, and 10d) which are exemplified by teleconference terminals, user personal computer (PC) terminals (20a, 20b, 20c, and 20d), a relay device 30, a management system 50, and a terminal management system 80. Here, the management system 50 and the terminal management system 80 constitute a manipulation system 5 for manipulating the telephone terminals 10 via a communication network 2. In the following, any given telephone terminal among the terminal devices (10a, 10b, 10c, and 10d) is referred to as a telephone terminal 10. Furthermore, in the following, the user PC terminals (20a, 20b, 20c, and 20d) are referred to as PCs (20a, 20b, 20c, and 20d), respectively, and any given PC among these is referred to as "PC 20". Each of the management system 50 and the terminal management system 80 is a computer provided with a function as a server.

The relay device 30 illustrated in FIG. 1 relays content data such as image data and sound data between multiple telephone terminals 10. Here, an image represented by the image data may be a moving image or a still image, or may be both. The management system 50 performs integrated management of login authentication of the telephone terminals 10, communication statuses of the telephone terminals 10, an address list, communication status of the relay device 30, etc. Furthermore, the terminal management system 80 communicates with the PCs 20, in order to perform processing for delivering various types of requests, etc., from the PCs 20 to the management system 50.

Through the communication system 1, users of the telephone terminals (10a, 10b, 10c, and 10d) are capable of communicating with each other. The communication is performed through sound or video (i.e. image), or both.

Furthermore, the telephone terminals 10, the PCs 20, the management system 50, and the terminal management system 80 are capable of communicating with each other via the communication network 2 such as the internet, a mobile telephone network, or a local area network (LAN). Each of locations (A, B, C, and D) is provided with one of telephone terminals 10 and one of the PCs 20. Here, although there are only one telephone terminal 10 and one PC 20 at each of the locations (A, B, C, and D) in FIG. 1 for convenience in explanation, there may be more. Furthermore, communication terminals other than the telephone terminals 10 such as a projector and an electronic sign (e.g. a digital signage) may be provided at each of the locations (A, B, C, and D) for communicating with each other via the communication network 2.

### «Hardware Configuration of the Embodiment»

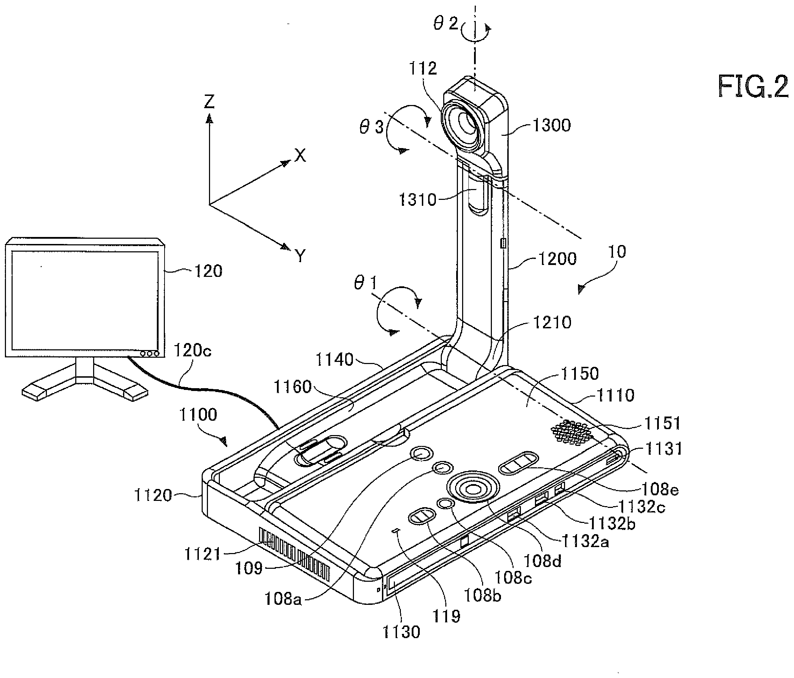

The following description explains a hardware configuration of the embodiment. FIG. 2 is an external view of the telephone terminal 10 according to the embodiment. As illustrated in FIG. 2, the telephone terminal 10 includes a case 1100, an arm 1200, and a camera housing 1300. Here, the front surface 1110 of the case 1100 has an air-intake part formed by multiple intake vent holes, whereas the rear surface 1120 of the case 1100 has an air-outlet part 1121 formed by multiple outlet vent holes. Therefore, when a cooling fan provided in the case 1100 is driven, the telephone terminal 10 is capable of taking in air behind the telephone terminal 10 through the air-intake part, and exhausting air to the rear of the telephone terminal 10 through the air-outlet part 1121. The right-side surface 1130 of the case 1100 has a sound pickup hole 1131 for collecting voice, other sound, noise, etc., by use of a later-described built-in microphone 114.

The case 1100 is provided with a manipulation panel 1150, by the right-side surface 1130. The manipulation panel 1150 is provided with multiple manipulation buttons (108a through 108e), a power switch 109, and an alarm lamp, which are described in the following description. Furthermore, the manipulation panel 1150 has a sound-output part 1151 which is formed by multiple sound output holes for allowing sound output from a later-described built-in speaker 115 to pass through. Further, the case 1100 is provided with an accommodating section 1160 by the left-side surface 1140, which serves as a recess for accommodating the arm 1200 and the camera housing 1300. The case 1100 is provided with multiple connection ports (1132a through 1132c), by the right-side surface 1130, for electrically connecting cables to a later-described external device connection interface (I/F) 118. Additionally, the case 1100 is provided with a connection port by the left-side surface 1140 for electrically connecting a cable 120c for a display 120 to the later-described external device connection I/F 118.

In the following explanation, any given manipulation button among the manipulation buttons (108a through 108e) is referred to as an "manipulation button 108", and any given connection port among the connection ports (1132a through 1132c) is referred to as a "connection port 1132".

The arm 1200 is attached to the case 1100 by means of a torque hinge 1210, so that the arm 1200 is rotatable vertically relative to the case 1100 in the range of a tilt angle θ1 of 0 through 135 degrees. In the illustration of FIG. 2, the tilt angle θ1 is at 90 degrees. The camera housing 1300 is provided with a later-described built-in camera 112, which captures images of a user, a document, a room, etc. Further, the camera housing 1300 is provided with a torque hinge 1310. The camera housing 1300 is attached to the arm 1200 by means of the torque hinge 1310. Further, the camera housing 1300 is attached to the arm 1200 by means of the torque hinge 1310, so that the camera housing 1300 is rotatable horizontally and vertically relative to the arm 1200 in the range of a pan angle θ2 of ±180 degrees and in the range of a tilt angle θ3 of ±45 degrees, where both the angles are at 0 degrees in the state illustrated in FIG. 2.

Here, the above-described external view of FIG. 2 is only an example, and the external view is not limited to as such. For example, the telephone terminal 10 may be a general PC, a smartphone, or a tablet computer. The camera and the microphone need not be built-in types, and may be external ones.

External views of the PC 20, the management system 50, and the terminal management system 80 are the same as that of a general server computer, and therefore explanations are omitted.

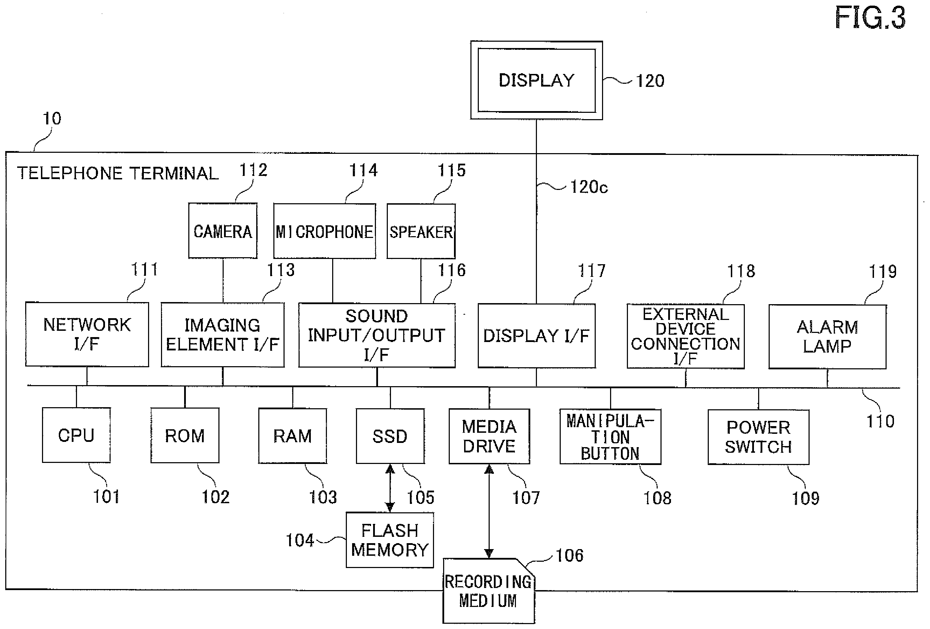

FIG. 3 is a diagram illustrating a hardware configuration of the telephone terminal 10 according to the embodiment. As illustrated in FIG. 3, the telephone terminal 10 according to the embodiment includes a central processing unit (CPU) 101 that controls an overall operation of the telephone terminal 10, a read-only memory (ROM) 102 that stores programs executed for driving the CPU 101 such as an initial program loader (IPL), a random access memory (RAM) 103 used as a work area for the CPU 101, a flash memory 104 that stores various types of data such as image data, sound data, and various types of programs for a communication terminal such as the telephone terminal 10, a solid state drive (SSD) 105 that controls read and write processing of various types of data from and to the flash memory 104 in accordance with control performed by the CPU 101, a media drive 107 that controls read and write (or store) processing of data from and to a recording medium 106 such as a flash memory, the manipulation button 108 that is operated for selecting an address, etc., the power switch 109 for turning the power of the telephone terminal 10 on and off, and a network I/F 111 for transmitting data via the communication network 2.

Furthermore, the telephone terminal 10 includes the built-in camera 112 that captures an image of an object for obtaining image data in accordance with control performed by the CPU 101, an imaging element I/F 113 that controls driving of the camera 112, the built-in microphone 114 that collects sound, the built-in speaker 115 that outputs sound, a sound input/output I/F 116 that performs input/output processing of sound signals between the microphone 114 and the speaker 115 in accordance with control performed by the CPU 101, a display I/F 117 that transmits image data to the external display 120 in accordance with control performed by the CPU 101, the external device connection I/F 118 for connecting various types of external devices, an alarm lamp 119 that notifies of problems concerning functions of the telephone terminal 10, and a bus line 110 such as an address bus and a data bus for electrically connecting each of the above-described constituent elements as illustrated in FIG. 3.

The display 120 is a display unit constituted by liquid crystal or organic electroluminescence (EL) for displaying an image of an object, a manipulation screen, etc. Further, the display 120 is connected to the display I/F 117 using the cable 120c. The cable 120c may be an analog red green blue (RGB) (i.e. video graphic array (VGA)) signal cable, a component video cable, a high-definition multimedia interface (HDMI) (registered trademark) signal cable, or a digital video interactive (DVI) signal cable.

The camera 112 includes a lens and a solid-state imaging element that converts light into electric charge in order to digitize an image (or video) of an object. The solid-state imaging element may be a complementary metal-oxide-semiconductor (CMOS), a charge-coupled device (CCD), etc.

The external device connection I/F 118 is electronically connectable to an external device such as an external camera, an external microphone, and an external speaker via a USB cable, etc., connected to the connection port 1132 provided on the case 1100. In a case where an external camera is connected, the external camera is driven, taking priority over the built-in camera 112, in accordance with control performed by the CPU 101. Similarly, in a case where an external microphone or an external speaker is connected, the external microphone or the external speaker is driven, taking priority over the built-in microphone 114 or the built-in speaker 115, respectively, in accordance with control performed by the CPU 101.

In addition, the recording medium 106 is removable from the telephone terminal 10. Further, the recording medium 106 is not limited to the flash memory 104, as long as the recording medium 106 is a non-volatile memory on which read or write processing of data is executed in accordance with control performed by the CPU 101, and therefore the recording medium 106 may be an electrically erasable and programmable ROM (EEPROM), etc.

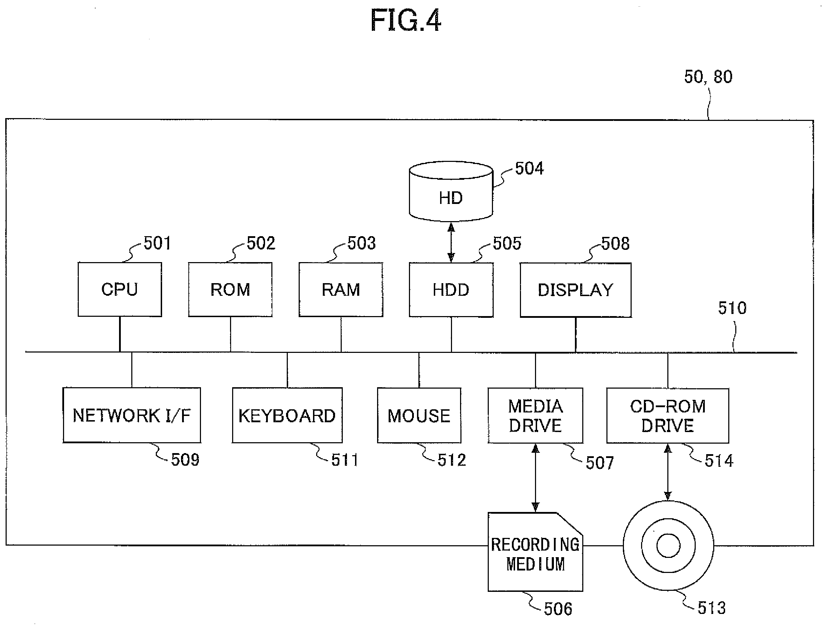

FIG. 4 is a diagram illustrating a hardware configuration of the management system 50. The management system 50 includes a CPU 501 that controls an overall operation of the management system 50, a ROM 502 that stores programs executed for driving the CPU 501 such as an IPL, a RAM 503 used as a work area for the CPU 501, a hard disk (HD) 504 that stores various types of data such as programs for the management system 50, a hard disk drive (HDD) 505 that controls read or write processing of various types of data from or to the HD 504 in accordance with control performed by the CPU 501, a media drive 507 that controls read or write (or store) processing of data from or to a recording medium 506 such as a flash memory, a display 508 that displays various types of information such as a cursor, a menu, a window, a character, or an image, a network I/F 509 for performing data communication via the communication network 2, a keyboard 511 having multiple keys for entering characters, numerical numbers, various types of instructions, etc., a mouse 512 for selecting and executing various types of instructions, selecting a processing object, moving the cursor, etc., a compact disc ROM (CD-ROM) drive 514 that controls read or write processing of various types of data from or to a removable recording medium such as a CD-ROM 513, and a bus line 510 such as an address bus and a data bus for electrically connecting the above-described constituent elements as illustrated in FIG. 4.

Hardware configurations of the PC 20 and the terminal management system 80 are similar to that of the management system 50, and therefore explanations are omitted.

### <<Functional Configuration of the Embodiment>>

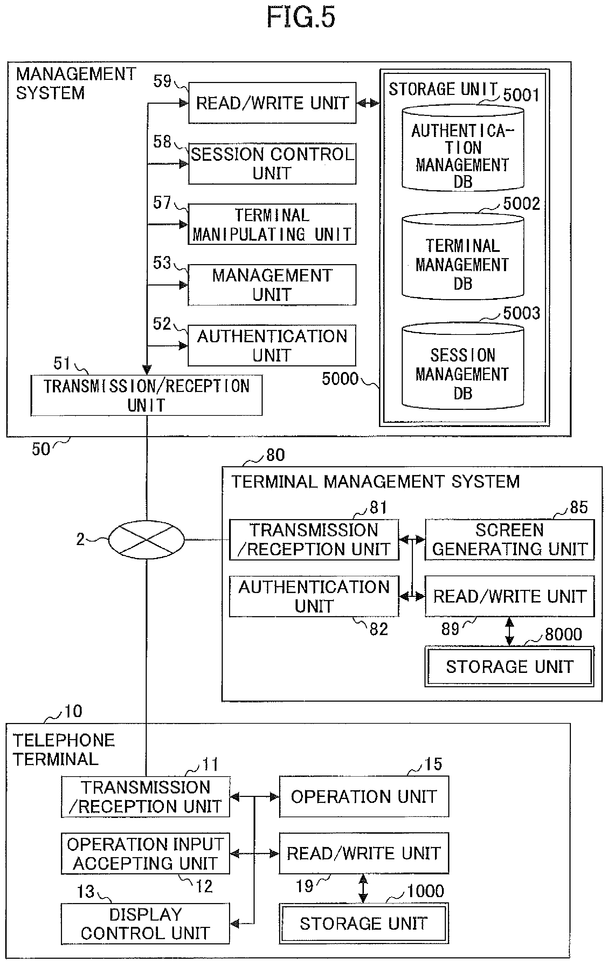

Next, the following description explains functional configurations according to the embodiment. FIG. 5 is a functional block diagram of the telephone terminal 10, the management system 50, and the terminal management system 80, which constitute the communication system 1 according to the embodiment. In FIG. 5, the telephone terminal 10, the management system 50, and the terminal management system 80 are coupled, so as to perform data communication via the communication network 2. Further, as the PC 20 is a general PC, the PC 20 is omitted in FIG. 5.

### <<Functional Configuration of the Telephone Terminal>>

The telephone terminal 10 includes a transmission/reception unit 11, an operation input accepting unit 12, a display control unit 13, an operation unit 15, and a read/write unit 19. Each of the units corresponds to a function enabled according to operation of a corresponding constituent element illustrated in FIG. 3, based on an instruction provided from the CPU 101 in accordance with a program decompressed on the RAM 103 from the flash memory 104. Furthermore, the telephone terminal 10 includes a storage unit 1000, which is enabled by the ROM 102, the RAM 103, and the flash memory 104 illustrated in FIG. 3.

Next, the following description explains details of the functional configuration of the telephone terminal 10, with reference to FIG. 3 and FIG. 5. Here, the following description explains each respective part of the functional configuration of the telephone terminal 10, further referring to a relation with a main constituent element from among the constituent elements illustrated in FIG. 3, enabling the respective part of the functional configuration of the telephone terminal 10.

The transmission/reception unit 11 provided in the telephone terminal 10 illustrated in FIG. 5, which is enabled by an instruction provided from the CPU 101 and the network I/F 111, transmits and receives various types of data (or information) to and from each telephone terminal of a communication partner, each device and system, etc., via the communication network 2.

The operation input accepting unit 12, which is enabled by an instruction provided from the CPU 101, the manipulation buttons (108a, 108b, 108c, and 108e), and the power switch 109, receives various types of input or selecting operation from a user. For example, when the power switch 109 is turned on by a user, the operation input accepting unit 12 illustrated in FIG. 5 receives the operation for turning the power on, and then turns the power on.

The display control unit 13, which is enabled by an instruction provided from the CPU 101 and the display I/F 117, performs operation for forwarding an image represented by image data which is transmitted from a counterpart terminal on a call to the display 120.

The operation unit 15, which is enabled by an instruction from the CPU 101, performs operation of the microphone 114, camera 112, etc., of the same telephone terminal 10, based on an operation instruction. For example, the operation unit 15 cuts off generation of sound data which is based on sound input to the microphone 114 (i.e. mic-mute), deactivates mic-mute, and adjusts microphone sensitivity to a predetermined level (i.e. mic-gain adjustment), based on an operation instruction. Further, the operation unit 15 cuts off generation of image data which is based on an image captured by the camera 112 (i.e. camera-mute), deactivates camera-mute, and performs digital zoom on a captured image (i.e. camera-zoom), based on an operation instruction.

The read/write unit 19, which is implemented by an instruction provided from the CPU 101 together with the SSD 105 or enabled by an instruction provided from the CPU 101, performs processing for storing various types of data in the storage unit 1000 and retrieving various types of data stored in the storage unit 1000.

### <Functional Configuration of the Management System>

The management system 50 includes a transmission/reception unit 51, an authentication unit 52, a management unit 53, a terminal manipulating unit 57, a session control unit 58, and a read/write unit 59. Each of the units corresponds to a function or a method enabled according to operation of a corresponding constituent element illustrated in FIG. 4, based on an instruction provided from the CPU 101 in accordance with a program for the management system 50 decompressed on the RAM 503 from the HD 504. Furthermore, the management system 50 includes a storage unit 5000, which is enabled by the HD 504. The storage unit 5000 stores an authentication management database (DB) 5001 constituted by a later-described authentication management table, a terminal management DB 5002 constituted by a later-described terminal management table, and a session management DB 5003 constituted by a later-described session management table.

### (Authentication Management Table)

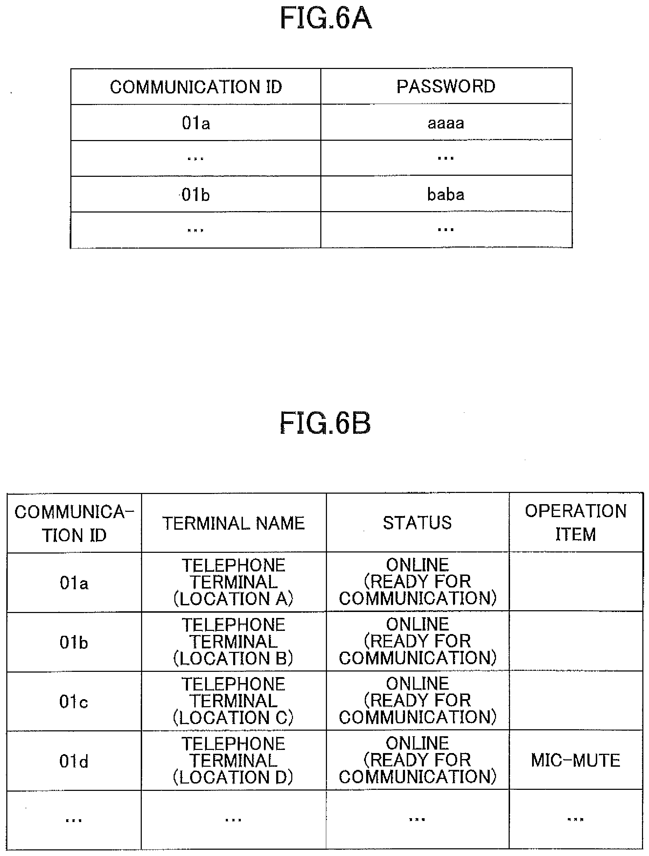

FIG. 6A is a conceptual diagram of the authentication management table. The authentication management table stores communication IDs for identifying telephone terminals 10 of communication partners and passwords, in a way that the communication IDs and the passwords correspond to each other, respectively. Here, the communication ID may be an ID preliminarily stored in the telephone terminal 10 or an ID input by a user of the telephone terminal 10. In a case where the communication ID is one that is input by a user of the telephone terminal 10, the management system 50 may store the communication ID, which is transmitted from the telephone terminal 10 along with a login request, in a way that the communication ID corresponds to the requestor telephone terminal 10 which has transmitted the login request, so as to be able to identify the telephone terminal 10 based on the communication ID. In the following explanation, the communication IDs of the telephone terminals (10a, 10b, 10c, and 10d) are "01a", "01b", "01c", and "01d", respectively.

### (Terminal Management Table)

FIG. 6B is a conceptual diagram of the terminal management table. The terminal management table stores communication IDs of the telephone terminals 10, terminal names, statuses of the telephone terminals 10, and operation items implemented by the telephone terminals 10 in accordance with operation instructions provided from the management system 50, in a way that each of the communication IDs corresponds to each of the terminal names, the statuses, and the operation items. Here, the status indicates whether the telephone terminal 10 identified by the communication ID is online, which is a state of being coupled to the management system 50, or offline, which is a state of not being coupled to the management system 50. Furthermore, the state of online includes following states: a state of "READY FOR COMMUNICATION", in which the telephone terminal 10 identified by the communication ID is ready for communication, and a state of "DURING COMMUNICATION", in which the telephone terminal 10 identified by the communication ID is currently in communication with another telephone terminal. Furthermore, the examples of an operation item may be mic-mute operation, mic-mute deactivation operation, camera-mute operation, camera-mute deactivation operation, mic-gain adjustment operation, camera-zoom operation, etc.

### (Session Management Table)

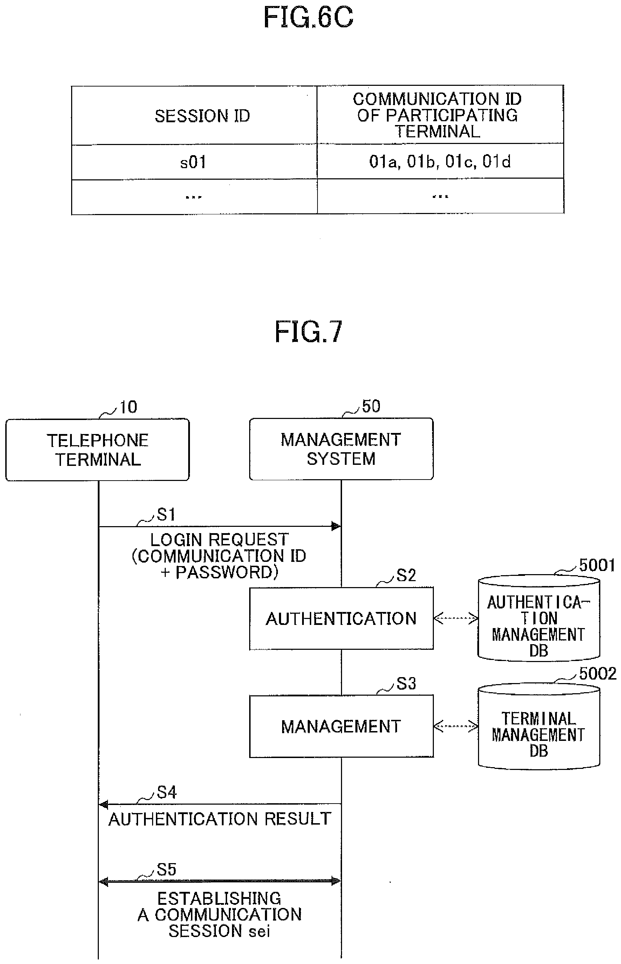

FIG. 6C is a conceptual diagram of the session management table. The session management table stores session IDs for identifying a session through which content data is transmitted between the telephone terminals 10 (i.e. a communication session sed) and communication IDs of the telephone terminals 10 participating in each of the sessions (i.e. participating terminals), in a way that each of the session IDs and the communication IDs correspond to each other.

Next, the following description explains details of the functional configuration of the management system 50. Here, the following description explains each respective part of the functional configuration of the management system 50, further referring to a relation with a main constituent element from among the constituent elements illustrated in FIG. 4, enabling the respective part of the functional configuration of the management system 50.

The transmission/reception unit 51, which is implemented by an instruction provided from the CPU 501 and the network I/F 509, transmits and receives various types of data (or information) to and from each telephone terminal, device, and system, via the communication network 2.

The authentication unit 52, which is enabled by an instruction provided from the CPU 501, searches the authentication management table (see FIG. 6A) using a communication ID and a password received by the transmission/reception unit 51 as search keys, and then determines, for authentication of the telephone terminal 10, whether the same pair of the communication ID and the password is stored in the authentication management table.

The management unit 53, which is enabled by an instruction provided from the CPU 501, stores communication IDs, terminal names, statuses, and operation items of the telephone terminals 10, in a way that the communication IDs and the terminal names correspond to the statuses and the operation items, respectively.

The terminal manipulating unit 57, which is enabled by an instruction provided from the CPU 501, transmits an operation instruction to the telephone terminal 10 via the communication network 2, in order to remotely manipulate the telephone terminal 10.

The session control unit 58, which is enabled by an instruction provided from the CPU 501, controls the communication session sed, in which content data is transmitted between the telephone terminals 10. Such control includes control for establishing the communication session sed, control for enabling the telephone terminal 10 to join the established communication session sed, and control for terminating the communication session sed, etc.

The read/write unit 59, which is enabled by an instruction provided from the CPU 501 together with the HDD 505 or by an instruction provided from the CPU 501, performs processing for storing various types of data in the storage unit 5000 and retrieving various types of data stored in the storage unit 5000.

### <Functional Configuration of the Terminal Management System>

The terminal management system 80 includes a transmission/reception unit 81, an authentication unit 82, a screen generating unit 85, and a read/write unit 89. Furthermore, the terminal management system 80 includes a storage unit 8000, which is enabled by the HD 504.

Next, the following description explains details of the functional configuration of the terminal management system 80. Here, the following description explains each respective part of the functional configuration of the terminal management system 80, further referring to a relation with a main constituent element from among the constituent elements illustrated in FIG. 4, enabling the respective part of the functional configuration of the terminal management system 80.

The transmission/reception unit 81, which is implemented by an instruction provided from the CPU 501 and the network I/F 509 illustrated in FIG. 4, transmits and receives various types of data (or information) to and from another terminal, each device and system, etc., via the communication network 2. Furthermore, the transmission/reception unit 81 includes a function as a web server and a data processing function.

The authentication unit 82, which is enabled by an instruction provided from the CPU 501, accesses the management system 50 and searches the authentication management DB 5001 (see FIG. 6A) stored in the storage unit 5000, and then determines whether the same pair of a communication ID and a password as a communication ID and a password transmitted from a requestor telephone terminal 10 requesting for login is stored, for the purpose of authenticating the requestor telephone terminal 10 as a legitimate terminal of the communication system 1.

The screen generating unit 85, which is enabled by an instruction provided from the CPU 501, generates an HTML document of a screen which is transmitted to the PC 20.

The read/write unit 89, which is enabled by an instruction provided from the CPU 501 together with the HDD 505 or by an instruction provided from the CPU 501, performs processing for storing various types of data in the storage unit 8000 and retrieving various types of data stored in the storage unit 8000.

### <<Processing and Operation of the Embodiment>>

The following description explains processing and operation of the telephone terminal 10 and the management system 50 which constitute the communication system 1 according to the embodiment. FIG. 7 is a sequence diagram illustrating processing for establishing a communication session between the telephone terminals.

As illustrated in FIG. 7, the transmission/reception unit 11 provided in the telephone terminal 10 transmits a login request to the management system 50 (step S1). The login request includes a communication ID for identifying the telephone terminal 10 requesting for login and a password. Thus, the transmission/reception unit 51 provided in the management system 50 receives the login request, as well as the communication ID and the password.

Then, the authorization unit 52 determines whether the same pair of the communication ID and the password as the communication ID and the password received by the transmission/reception unit 51 is stored in the authentication management table (see FIG. 6A), for the purpose of authenticating the telephone terminal 10 requesting for login (step S2). Then, in a case where the telephone terminal 10 is determined to be a legitimate terminal according to the authentication, the management unit 53 changes a status corresponding to the communication ID of the telephone terminal on the terminal management table (see FIG. 6B) to "ONLINE (READY FOR COMMUNICATION)" (step S3).

Then, the transmission/reception unit 51 transmits an authentication result to the telephone terminal 10 requesting for login (step S4). Thus, the transmission/reception unit 11 receives the authentication result. Then, in a case where the telephone terminal is determined to be a legitimate terminal in the step S2, a communication session sei is established between the telephone terminal 10 requesting for login and the management system 50 (step S5). Here, for differentiating from the communication session sed between the telephone terminals 10, a communication session between the management system 50 and the telephone terminal 10 or the PC 20 is referred to as a communication session sei.

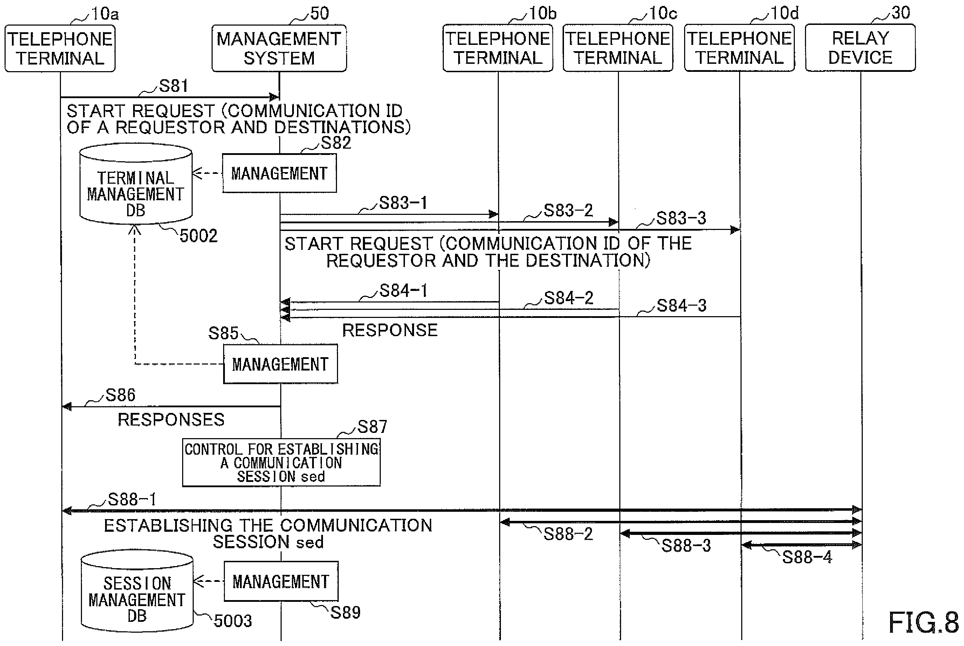

Next, the following description explains processing for establishing a communication session for transmitting content data between the telephone terminals 10, with reference to FIG. 8. FIG. 8 is a sequence diagram illustrating processing for establishing a communication session.

As illustrated in FIG. 8, the transmission/reception unit 11 provided in the telephone terminal 10 transmits a start request for communication to the management system 50, in accordance with operation of manipulation button 108 by a user (step S81). The start request for communication includes a communication ID of the telephone terminal 10 requesting to start communication and communication IDs of destination telephone terminals 10. In the following explanation, the telephone terminal requesting to start communication is referred to as a telephone terminal 10a, and the destination telephone terminals are referred to as telephone terminals (10b, 10c, and 10d), respectively.

The transmission/reception unit 51 provided in the management system 50 receives the start request for communication. Then, the management unit 53 provided in the management system 50 changes a status corresponding to the communication ID of the telephone terminal 10 requesting to start communication to "ONLINE (DURING COMMUNICATION)" on the terminal management table (see FIG. 6B) (step S82).

Then, the transmission/reception unit 51 provided in the management system 50 transmits the start request for communication to each of the destination telephone terminals (10b, 10c, and 10d) (steps (S83-1, S83-2, and S83-3)). The start request for communication includes the communication ID of the telephone terminal 10a requesting to start communication and the communication IDs of the destination telephone terminals (10b, 10c, and 10d), which are transmitted at the step S81. Thus, each of the destination telephone terminals (10b, 10c, and 10d) receives the start request for communication.

Responding to the start request for communication, the transmission/reception unit 11 provided in each of the telephone terminals (10b, 10c, and 10d) transmits a response regarding the start request for communication to the management system 50, in accordance with operation of the manipulation button 108 by a user (steps (S84-1, S84-2, and S84-3)). In a case where the user of each of the destination telephone terminals (10b, 10c, and 10d) starts the communication, the response indicates that the request is accepted, whereas in a case where the user of each of the destination telephone terminals (10b, 10c, and 10d) does not start the communication, the response indicates that the request is declined. In the following explanation, the telephone terminals (10b, 10c, and 10d) transmit responses indicative of accepting the request to the management system 50.

Thus, the transmission/reception unit 51 provided in the management system 50 receives the responses indicative of accepting the request. Then, the management unit 53 provided in the management system 50 changes the statuses corresponding to the communication IDs of the destination telephone terminals (10b, 10c, and 10d) to "ONLINE (DURING COMMUNICATION)" on the terminal management table (see FIG. 6B) (step S85).

Then, the transmission/reception unit 51 provided in the management system 50 forwards the responses transmitted from the destination telephone terminals (10b, 10c, and 10d) in the steps (S84-1, S84-2, and S84-3) to the requestor telephone terminal 10a of the start request (step S86). Thus, the transmission/reception unit 21 provided in the telephone terminal 10a receives the responses indicative of accepting the request.

Then, the session control unit 58 provided in the management system 50 controls to establish a communication session sed for transmitting image data and sound data between the telephone terminals (10a, 10b, 10c, and 10d) via the communication network 2 (step S87). A method for establishing the communication session sed may be arbitrarily selected. For example, the transmission/reception unit 51 may transmit connection information for connecting to the relay device 30, which relays image data and sound data between the telephone terminals, to each of the telephone terminals (10a, 10b, 10c, and 10d), in accordance with control performed by the session control unit 58. Further, the transmission/reception unit 51 may transmit a request for starting relaying image data and sound data between the telephone terminals (10a, 10b, 10c, and 10d) to the relay device 30, in accordance with control performed by the session control unit 58. Further, a publicly known method, such as one illustrated in FIG. 25 of Japanese Unexamined Patent Application Publication No. 2012-50063, may be employed as a way of establishing the communication session sed.

The communication session sed may be established, using such methods as described above (steps (S88-1, S88-2, S88-3, and S88-4)). Then, the telephone terminal 10a transmits image data and sound data to the counterpart telephone terminals (10b, 10c, and 10d). Similarly, each of the telephone terminals (10b, 10c, and 10d) transmits image data and sound data generated in the same terminal to the telephone terminal 10a. Here, the sound data transmitted from the telephone terminals 10 is generated, based on a sound signal output from the microphone 114 of the same terminal, in accordance with an instruction provided from the CPU 101. Further, the image data transmitted from the telephone terminals 10 is generated, based on a video signal output from the camera 112 of the same telephone terminal, in accordance with an instruction provided from the CPU 101.

When the communication session sed is established, the session control unit 58 generates a session ID for identifying the established communication session sed. Then, the management unit 53 associates the telephone terminals (10a, 10b, 10c, and 10d) participating in the communication session sed with the session ID on the session management table (see FIG. 6C) (step S89).

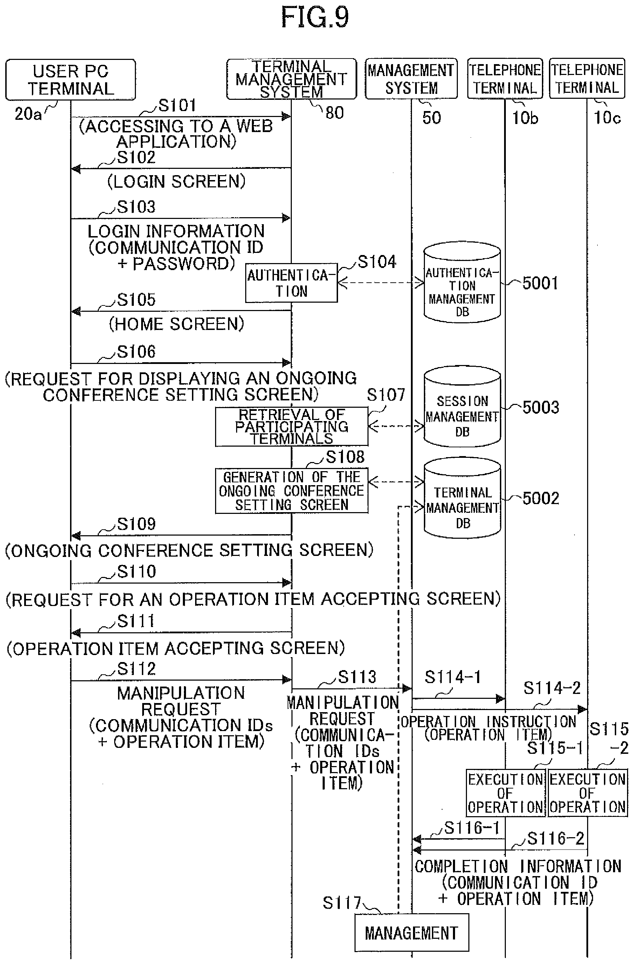

The following description explains processing performed when a user at the location A manipulates, from the PC 20a, a counterpart telephone terminals (10b, 10c, and 10d) via the terminal management system 80, while a communication session sed is underway. Here, FIG. 9 is a sequence diagram illustrating processing for manipulating the counterpart telephone terminals (10b, 10c, and 10D).

First, a user of the PC 20a enters a URL on a web browser of the PC 20a, so that the PC 20a accesses a web application provided by the terminal management system 80 (step S101). Then, a server function of the transmission/reception unit 81 provided in the terminal management system 80 provides permission as to display of a login screen on the PC 20a, so as to prompt the user to enter a communication ID and a password corresponding to the telephone terminal 10a (step S102). In response, when the user enters the communication ID and the password of the telephone terminal 10a, login information including the communication ID and the password of the telephone terminal 10a is transmitted from the PC 20a to the terminal management system 80 (step S103).

Then, the authorization unit 82 provided in the terminal management system 80 accesses the management system 50 and searches the authentication management DB 5001 (see FIG. 6A) stored in the storage unit 5000, and then determines whether the same pair of a communication ID and a password as the communication ID and the password of the telephone terminal 10a is stored, for the purpose of authenticating the PC 20a as a legitimate terminal of the communication system 1 (step S104).

In a case where the PC 20a is determined to be a legitimate terminal according to the authentication, the web server function of the transmission/reception unit 81 provided in the terminal management system 80 provides permission as to display of a home screen on the PC 20a (step S105). The home screen is provided with a link to an ongoing conference setting screen. When the link is selected through manipulation of the PC 20a, a request for displaying the ongoing conference setting screen is transmitted from the PC 20a to the management system 50 (step S106).

Then, the read/write unit 89 searches the session management DB 5003 (see FIG. 6C) stored in the storage unit 5000 provided in the management system 50, using the communication ID "01a" of the telephone terminal 10a, in order to retrieve communication IDs of the telephone terminals 10 participating in a communication session sed (i.e. participating terminal), in which the telephone terminal 10a participates (step S107).

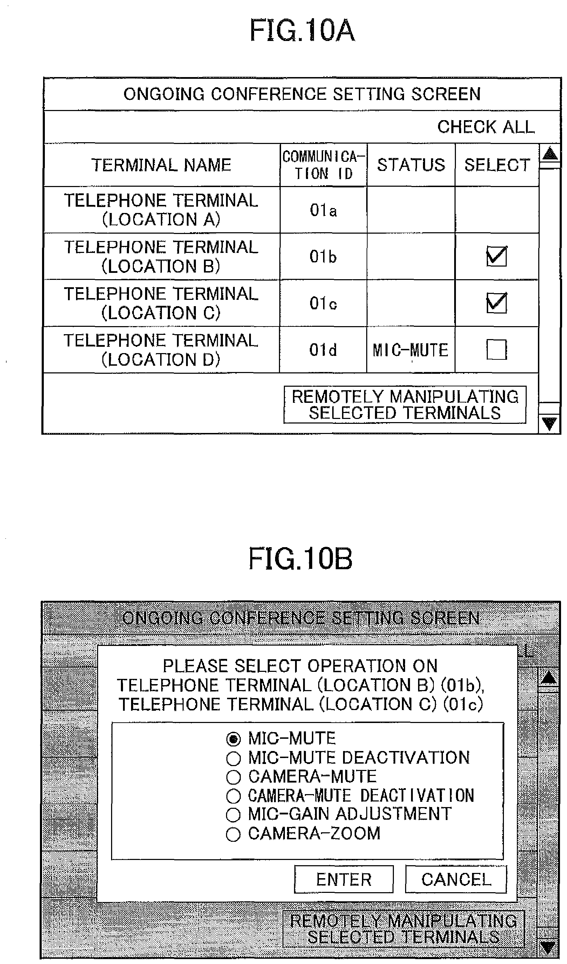

Then, the screen generating unit 85 searches the terminal management DB 5002 (see FIG. 6B), using the communication IDs retrieved in the step S107, and then extracts corresponding terminal names and operation items, in order to generate an HTML document of the ongoing conference setting screen (step S108). Then, the web server function of the transmission/reception unit 81 provides permission as to display of the ongoing conference setting screen on the PC 20a (step S109). FIG. 10A is a drawing illustrating an example of the ongoing conference setting screen. On the ongoing conference setting screen, terminal names, communication IDs of the participating terminals, statuses, and check boxes for accepting selection of telephone terminals 10 to be remotely manipulated.

The following description explains processing in a case of a user at the location A performing mic-mute operation on participating terminals (i.e. telephone terminals (10b and 10c)) for which mic-mute operation had not been performed.

First, the user checks checkboxes that correspond to the telephone terminals (10b and 10c) on the ongoing conference setting screen of the PC 20a, and then selects "REMOTELY MANIPULATING SELECTED TERMINALS" button, in order to request for an operation item accepting screen from the PC 20a to the management system 50 (step S110). Responding to the request, the web server function of the transmission/reception unit 81 provides permission as to display of the operation item accepting screen on the PC 20a (step S111). FIG. 10B is a drawing illustrating an example of the operation item accepting screen. In the example, options of operation items include mic-mute, mic-mute deactivation, camera-mute, camera-mute deactivation, mic-gain adjustment, and camera-zoom.

Next, when the user clicks on radio button "MIC-MUTE" as an operation item on the PC 20a and then presses "ENTER" button on the operation item accepting screen, a manipulation request, which includes communication IDs of the telephone terminals (10b and 10c) selected as objects of the manipulation request on the ongoing conference setting screen and the operation item "MIC-MUTE" accepted on the operation item accepting screen, is transmitted from the PC 20a to the management system 50 (step S112).

Upon receiving the above manipulation request, the transmission/reception unit 81 provided in the terminal management system 80 transmits the received manipulation request to the management system 50 (step S113). The transmission/reception unit 51 provided in the management system 50 receives the manipulation request transmitted from the terminal management system 80. Then, the terminal manipulating unit 57 provided in the management system 50 transmits, based on the manipulation request, an operation instruction corresponding to the operation item to each of the telephone terminals (10b and 10c) which are objects of the manipulation request, through the transmission/reception unit 51 (steps S114-1 and S114-2).

The operation unit 15 provided in each of the telephone terminals (10b and 10c) that receives the operation instruction performs an operation, based on the operation item included in the operation instruction (steps S115-1 and S115-2). For example, in the case that the operation item is mic-mute operation, the operation unit 15 cuts off output of sound data which is generated from voice collected by the microphone 114. In the case that the operation item is mic-mute deactivation operation, the operation unit 15 deactivates mic-mute. In the case that the operation item is mic-gain adjustment operation, the operation unit 15 adjusts microphone sensitivity to a predetermined level. In the case that the operation item is camera-mute operation, the operation unit 15 cuts off output of image data which is generated from an image captured by the camera 112. In the case that the operation item is camera-mute deactivation operation, the operation unit 15 deactivates camera-mute. In the case that the operation item is camera-zoom operation, the operation unit 15 performs digital zoom on a captured image.

When execution of the above operation is completed, the transmission/reception unit 11 provided in each of the telephone terminals (10b and 10c) transmits completion information, which includes the communication ID of the same terminal and the executed operation item, to the management system 50 (steps S116-1 and S116-2). When the transmission/reception unit 51 provided in the management system 50 receives the completion information, the management unit 53 stores, in the terminal management table, the communication ID and the operation item included in the completion information, in a way that the communication ID and the operation item correspond to each other (step S117). Thus, for a next instance of the terminal management system 80 providing permission as to display of the ongoing conference setting screen, a user is notified of updated operation items, which are displayed on the PC 20.

### <<Effect of the Embodiment>>

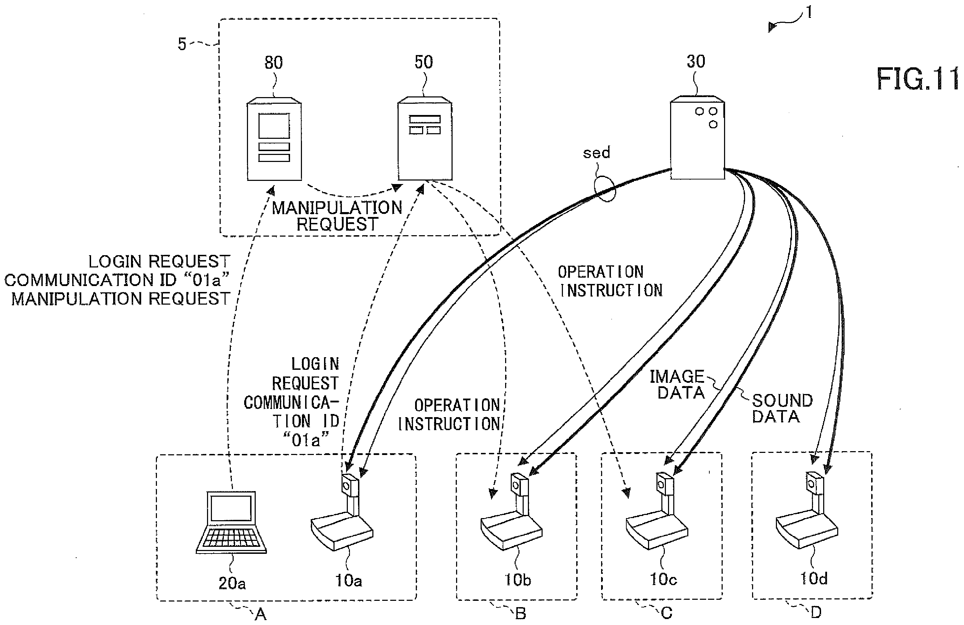

The following description explains an effect of the above embodiment, with reference to FIG. 11. FIG. 11 is a conceptual diagram illustrating a situation of transmitting and receiving various types of information in the communication system 1.

The transmission/reception unit 81 (i.e. an example of an identification information receiving unit) provided in the terminal management system 80, which constitutes the manipulation system 5, receives the communication ID "01a" (i.e. an example of identification information) corresponding to the telephone terminal 10a (i.e. an example of a telephone terminal), which is transmitted from the PC 20a (i.e. an example of an information processing apparatus), while the communication session sed (i.e. an example of a session), where image data and sound data (i.e. an example of content data) generated in the telephone terminal 10a are transmitted to each of the telephone terminals (10b, 10c, and 10d) (i.e. an example of another telephone terminal), is underway. The transmission/reception unit 51 (i.e. an example of an operation instruction transmitting unit) provided in the management system 50, which constitutes the manipulation system 5, transmits an operation instruction based on a request from the PC 20a to each of the telephone terminals (10b and 10c) that are counterpart terminals in the communication with the telephone terminal 10a identified by the communication ID "01a". Here, when the PC 20a is placed out of the view angle of the camera 112 provided on the telephone terminal 10a and in an area where the microphone 114 provided on the telephone terminal 10a is not able to pick up manipulation sound from the PC 20a, transmission, through the communication session sed to the telephone terminals (10b, 10c, and 10d), of noise caused by entering the manipulation request and of an image of a user entering the manipulation request may be prevented.

The session management DB 5003 (i.e. an example of a participating terminal managing unit) provided in the management system 50 manages the communication IDs (i.e. an example of identification information) of the telephone terminals (10a, 10b, 10c, and 10d) (i.e. participating terminals) participating in the communication session sed. Further, the transmission/reception unit 51 (i.e. an example of an operation instruction transmitting unit) transmits the communication IDs of the participating terminals stored in the session management DB 5003 to the PC 20a. Thus, even when the user of the PC 20a is not able to check the display 120 of the telephone terminal 10a, the user may check the communication partners on the PC 20.

After the transmission/reception unit 51 transmits an operation instruction, the management unit 53 (i.e. an example of an operation item managing unit) provided in the management system 50 associates, in the terminal management DB 5002, the operation item with the communication IDs corresponding to the telephone terminal 10s which are the destinations of the operation instruction. The transmission/reception unit 51 transmits, to the PC 20a, the communication IDs corresponding to the participating terminals, which are stored in the session management DB 5003, and the operation items corresponding to the communication IDs corresponding to the participating terminals, which are stored in the terminal management DB 5002 (i.e. an example of an operation item managing unit). Thus, the operation item implemented on each of the participating terminals may be checked on the PC 20a, and therefore an appropriate manipulation request intended for a participating terminal may be made.

The transmission/reception unit 81 (i.e. an example of a selection accepting unit) provided in the terminal management system 80 provides permission as to display of an ongoing conference setting screen on the PC 20a, in order to accept the telephone terminals 10 selected as objects of the manipulation request, among the telephone terminals 10 participating in the communication session sed. When the selection is accepted by the transmission/reception unit 81, the transmission/reception unit 51 provided in the management system 50 transmits the operation instruction to each of the selected telephone terminals 10. Thus, the operation instruction may be transmitted to a telephone terminal 10 arbitrarily selected among participating terminals.

The authorization unit 52 (i.e. an example of a first authentication unit) provided in the management system 50 performs authentication of the telephone terminal 10a. Additionally, the authorization unit 82 (i.e. an example of a second authentication unit) provided in the terminal management system 80 performs authentication of the PC 20a, based on the communication ID corresponding to the telephone terminal 10a, which is transmitted from the PC 20a. Thus, a manipulation request may be accepted from a legitimate PC 20a.

The above-mentioned operation instruction may be at least one among mic-mute operation, mic-mute deactivation operation, mic-gain adjustment operation, camera-mute operation, camera-mute deactivation operation, and camera-zoom operation. Based on such an operation instruction, the management system 50 may control output of image data and sound data from each of the participating terminals.

### <<Supplemental Description of the Embodiment>>

Programs for the telephone terminal 10 and the management system 50 may be stored in a computer-readable recording medium (e.g. the recording medium 106) as installable and executable files, for the purpose of distribution. Further, other examples of the recording medium may be a compact disc recordable (CD-R), a digital versatile disk (DVD), a blue-ray disk, etc.

Furthermore, the management system 50 according to the above embodiment may be constituted by a single computer, and may be constituted by multiple computers which are assigned separate units (i.e. functions or methods), respectively.

Furthermore, the management system 50 and the terminal management system 80 may be constituted by a single computer.

Furthermore, the recording medium such as a CD-ROM which stores the programs according to the above embodiment and the HD 504 which stores such programs may be provided within and outside a country as a program product.

Furthermore, although a teleconference terminal is explained as an example of the telephone terminal 10 in the above description, the telephone terminal 10 is not limited to as such. For example, the telephone terminal 10 may be an internet protocol (IP) phone, an internet phone, a PC, etc.

Furthermore, although communication performed by a telephone terminal (broader concept) such as a teleconference terminal (more limitative concept) is explained in the above description, a communication format is not limited to as such. For example, the disclosed technique may be applied to a case where an application installed on a terminal automatically accesses a server of a data center to transmit or acquire various types of data. In such a case, a communication counterpart may be a server, not a telephone terminal. Furthermore, the telephone terminal may be a game machine, car navigation equipment, etc.

The present international patent application claims the benefit of priority of Japanese Patent Application No. 2014-171145, filed on August 26, 2014, the contents of which are incorporated herein by reference in their entirety.

### [Reference Signs List]

- 1: communication system
- 2: communication network
- 5: manipulation system
- 10: telephone terminal
- 20: user PC terminal
- 11: transmission/reception unit
- 12: operation input accepting unit
- 13: display control unit
- 15: operation unit
- 19: read/write unit
- 50: management system
- 51: transmission/reception unit
- 52: authorization unit
- 53: management unit
- 57: terminal manipulating unit
- 58: session control unit
- 59: read/write processing unit
- 81: transmission/reception unit
- 82: authorization unit
- 85: screen generating unit
- 89: read/write unit
- 1000: storage unit
- 5000: storage unit
- 8000: storage unit
- 5001: authentication management DB
- 5002: terminal management DB
- 5003: session management DB

## Claims

1. A manipulation system comprising:
an identification information receiving unit configured to receive identification information for identifying a communication terminal while a session established between the communication terminal and another communication terminal is underway, the session being established for a plurality of communication terminals coupled to a communication network to transmit and receive content data generated in the plurality of communication terminals, the identification information being transmitted from an information processing apparatus coupled to the communication network; and
an operation instruction transmitting unit configured to transmit to said another communication terminal an operation instruction based on a request provided from the information processing apparatus, said another communication terminal being a communication partner of the communication terminal that is identified by the identification information.

2. The manipulation system according to claim 1, further comprising:
a participating terminal managing unit configured to store an identification information for identifying each of a plurality of communication terminals participating in the session; and
an identification information transmitting unit configured to transmit to the information processing apparatus the identification information stored in the participating terminal managing unit.

3. The manipulation system according to claim 2,
wherein the operation instruction transmitting unit includes an operation item managing unit configured to, responding to transmission of the operation instruction, store an operation instructed by the operation instruction in association with the identification information for identifying a communication terminal to which the operation instruction is transmitted, and
wherein the identification information transmitting unit transmits to the information processing apparatus the identification information stored in the participating terminal managing unit and the operation associated with the identification information in the operation item managing unit.

4. The manipulation system according to any one of claims 1 through 3, further comprising a selection accepting unit configured to accept a selection of a communication terminal, among a plurality of communication terminals participating in the session, as a subject to perform the operation based on the request provided from the information processing apparatus, wherein the operation instruction transmitting unit transmits the operation instruction to the selected communication terminal, upon the selection accepting unit accepting the selection of the communication terminal.

5. The manipulation system according to any one of claims 1 through 4, further comprising:
a first authentication unit configured to authenticate the communication terminal, and
a second authentication unit configured to authenticate the information processing apparatus based on the identification information transmitted by the information processing apparatus.

6. The manipulation system according to any one of claims 1 through 5,
wherein the plurality of the communication terminal are provided with at least one of a camera for capturing an image and a microphone for collecting sound,
wherein at least one operation instructed by the operation instruction is selected among mic-mute operation, mic-mute deactivation operation, mic-gain operation, camera-mute operation, camera-mute operation and camera-zoom operation,
wherein the content data include at least one of image data and sound data, the image data being generated based on an image captured by the camera, the sound data being generated based on sound collected by the microphone, and
wherein the operation instruction transmitting unit transmits the operation instruction for instructing an operation that relates to generation of the content data performed by the plurality of communication terminals.

7. A communication terminal comprising:
an operation instruction receiving unit configured to receive an operation instruction transmitted in the manipulation system according to any one of claims 1 through 6; and
an operation unit configured to execute an operation based on the operation instruction.

8. A communication system comprising:
the manipulation system according to any one of claims 1 through 6;
the communication terminal according to any one of claims 1 through 6; and
the information processing apparatus according to any one of claims 1 through 6.

9. A method for manipulation which causes a manipulation system for manipulating a communication terminal via a communication network to execute a process, the process comprising:
receiving identification information for identifying a communication terminal while a session established between the communication terminal and another communication terminal is underway, the session being established for a plurality of communication terminals coupled to a communication network to transmit and receive content data generated in the plurality of communication terminals, the identification information being transmitted from an information processing apparatus coupled to the communication network; and
transmitting to said another communication terminal an operation instruction based on a request provided from the information processing apparatus, said another communication terminal being a communication partner of the communication terminal that is identified by the identification information.

10. A program for causing a computer to function as the manipulation system according to any one of claims 1 through 6.
